# EUROPÄISCHE PATENTSCHRIFT

(11) **EP 2 765 031 B1**
(45) Veröffentlichungstag und Bekanntmachung des Hinweises auf die Patenterteilung: **28.06.2017**
(21) Anmeldenummer: 14153988.2
(22) Anmeldetag: 05.02.2014
(51) Int. Cl.: B60R 1/06

(54) **Sichtsystem für Fahrzeuge, insbesondere Nutzfahrzeuge**
Vision system for vehicles, in particular for commercial vehicles
Système de vision pour véhicules, notamment véhicules utilitaires

(30) Priorität: 08.02.2013 DE 102013002111
(43) Veröffentlichungstag der Anmeldung: 13.08.2014
(73) Patentinhaber: MEKRA LANG GmbH & Co. KG, 91465 Ergersheim (DE)
(72) Erfinder: Lang, Werner, 91465 Ergersheim (DE); Kunz, Manuel, 97285 Röttingen (DE)
(74) Vertreter: Kramer Barske Schmidtchen Patentanwälte PartG mbB

(56) Entgegenhaltungen:
- EP-A1- 2 555 518

## Beschreibung

Die vorliegende Erfindung betrifft ein Sichtsystem für Fahrzeuge, insbesondere Nutzfahrzeuge, und insbesondere ein Sichtsystem mit einer Bildaufnahmeeinheit zur Verwendung an Nutzfahrzeugen. Außerdem betrifft die vorliegende Erfindung ein Fahrzeug, insbesondere ein Nutzfahrzeug, das mit einem hierin offenbarten Sichtsystem ausgestattet ist.

Bei Kraftfahrzeugen sind abhängig vom Typ des Kraftfahrzeugs, wie beispielsweise Krafträdern, Kraftfahrzeugen zur Personenbeförderung, Kraftfahrzeugen zur Güterbeförderung, usw. sogenannte Sichtfelder gesetzlich vorgegeben, welche durch eine Einrichtung für indirekte Sicht, in herkömmlicher Weise durch Spiegel, abgebildet werden müssen und durch den auf einem Fahrersitz sitzenden Fahrer dauerhaft und zuverlässig jederzeit über die Einrichtung für indirekte Sicht einsehbar sein müssen. Für den europäischen Raum gelten die in der ECE Richtlinie R 46 gesetzlich vorgeschriebenen Sichtfelder für Rückspiegel, die durch den Fahrer dauerhaft und zuverlässig einsehbar sein müssen.

So ist für Nutzfahrzeuge, wie beispielsweise LKWs oder Lieferwägen, derzeit beispielsweise als Einrichtung zur indirekten Sicht ein Hauptspiegel auf jeweils der Fahrerseite und der Beifahrerseite vorgesehen, mit welchem der Fahrzeugführer einen ebenen und horizontalen Teil der Fahrbahn von bestimmter Breite einsehen kann, der sich ab einer festgelegten Entfernung hinter den Augenpunkten des Fahrzeugsführers bis zum Horizont erstreckt. Ein Streifen geringerer Breite ist ebenfalls mittels dieser Spiegel für den Fahrzeugführer einsehbar, der jedoch bereits in kürzerer Entfernung hinter den Augenpunkten des Fahrers beginnt. Solche gesetzlich vorgeschriebenen Bereiche, die jederzeit und dauerhaft vom Fahrer unter Verwendung der Einrichtungen zur indirekten Sicht einsehbar sein müssen, werden als Sichtfelder bezeichnet. Der durch den Hauptspiegel eingesehene, gesetzlich als einsehbar vorgeschriebene Bereich in der Nähe des Fahrzeugs wird im Folgenden entsprechend als Sichtfeld des Hauptspiegels bezeichnet und ist gemäß der ECE Richtlinie R 46 auch als Sichtfeld II definiert.

Neben diesen Hauptspiegeln sind beidseitig des Nutzfahrzeugs Sichtfelder als einzusehen verlangt, die durch Weitwinkelspiegel abgebildet werden. Mit den Weitwinkelspiegeln ist jeweils ein Bereich hinter den Augenpunkten des Fahrers in einer bestimmten Erstreckung in Längsrichtung des Fahrzeugs eingesehen, welcher breiter als der durch den Hauptspiegel einsehbare Bereich ist, sich jedoch nur eine bestimmte Länge entlang des Fahrzeugs erstreckt. Dieser Bereich wird gemäß der ECE Richtlinie R 46 als Sichtfeld IV definiert.

Beispielsweise muss das Sichtfeld der Gruppe II (Sichtfeld II) gemäß der ECE Richtlinie R 46 derzeit so beschaffen sein, dass der Fahrzeugführer mindestens einen ebenen und horizontalen Teil der Fahrbahn von 5 m Breite einsehen kann, der fahrzeugseitig begrenzt ist durch eine zur senkrechten Längsmittelebene des Fahrzeugs parallele, durch den äußersten Punkt auf der Fahrerseite bzw. der Beifahrerseite des Fahrzeugs verlaufende Ebene, und der sich vom Horizont bis 30 m hinter den Augenpunkten des Fahrzeugführers erstreckt. Außerdem muss der Fahrzeugführer einen 1 m breiten Streifen der Fahrbahn einsehen können, der fahrzeugseitig begrenzt ist durch eine zur senkrechten Längsmittelebene des Fahrzeugs parallele, durch den äußersten Punkt auf der Fahrerseite bzw. Beifahrerseite des Fahrzeugs verlaufende Ebene, und der 4 m hinter der durch die Augenpunkte des Fahrzeugführers verlaufenden senkrechten Ebene beginnt.

Beispielsweise muss das Sichtfeld der Gruppe IV (Sichtfeld IV) gemäß der ECE Richtlinie R 46 derzeit so beschaffen sein, dass der Fahrzeugführer mindestens einen ebenen und horizontalen Teil der Fahrbahn von 15 m Breite einsehen kann, der fahrzeugseitig begrenzt ist durch eine zur senkrechten Längsmittelebene des Fahrzeugs parallele, durch den äußersten Punkt auf der Fahrerseite bzw. Beifahrerseite des Fahrzeugs verlaufende Ebene, und der sich mindestens von 10 m bis 25 m hinter den Augenpunkten des Fahrzeugführers erstreckt. Außerdem muss der Fahrzeugführer einen 4,5 m breiten Streifen der Fahrbahn einsehen können, der fahrzeugseitig begrenzt ist durch eine zur senkrechten Längsmittelebene des Fahrzeugs parallele, durch den äußersten Punkt auf der Fahrerseite bzw. Beifahrerseite des Fahrzeugs verlaufende Ebene, und der 1,5 m hinter der durch die Augenpunkte des Fahrzeugführers verlaufenden senkrechten Ebene beginnt.

Trotz dieser vorgeschriebenen Spiegel bzw. Einrichtungen für indirekte Sicht ist es jedoch für einen Fahrzeugführer kaum möglich bzw. sehr schwierig, die unfallkritischen Bereiche rund um ein Nutzfahrzeug jederzeit vollständig und ausreichend im Auge zu behalten. Zudem ist aufgrund der Vielzahl der Spiegel die Anforderung an den Fahrzeugführer erhöht, diese Spiegel nahezu gleichzeitig im Auge zu behalten. Die Abbildung der Sichtfelder mittels Spiegel hat zudem eine Einflussnahme der Spiegel auf die Umströmung des Fahrzeugs zur Folge.

Gerade bei Nutzfahrzeugen wie LKWs, Bussen etc. ist die Einsehbarkeit auf den Fahrerseiten kritisch. Hindernisse und andere Verkehrsteilnehmer werden schlecht erkannt, da die Bereiche der toten Winkel trotz der Vorgaben hinsichtlich der gesetzlich vorgeschriebenen Sichtfelder verhältnismäßig groß sind und somit Hindernisse oder andere Verkehrsteilnehmer in der Einrichtung zur indirekten Sicht nicht erkennbar sind. Auch ist die Orientierung für den Fahrer auf den verhältnismäßig zahlreichen Einrichtungen für indirekte Sicht schwierig, so dass die Gefahr besteht, dass gerade bei Abbiege- oder Rangiervorgängen Hindernisse übersehen werden, obwohl sie in der Einrichtung für indirekte Sicht abgebildet sind. So werden häufig Unfälle aufgrund dessen verursacht, dass der Fahrer des Nutzfahrzeugs nicht ausreichenden Einblick in seitliche Bereiche des Fahrzeugs besitzt, insbesondere in den toten Winkel, der einen seitlichen Bereich neben dem Fahrzeug darstellt, der durch den Fahrer trotz der oben beschriebenen Außenspiegel kaum bzw. nicht einsehbar ist.

In letzter Zeit ist es zunehmend angedacht, neben herkömmlichen Spiegeln als Einrichtungen zur indirekten Sicht entweder in Ergänzung oder als Ersatz für die Spiegel Kamerasysteme bzw. Bildaufnahmesysteme als Einrichtungen zur indirekten Sicht einzusetzen, bei denen eine Bildaufnahmeeinheit ein Bild kontinuierlich erfasst, diese von der Bildaufnahmeeinheit erfassten (Video-)Daten, beispielsweise mittels einer Berechnungseinheit und, gegebenenfalls nach Weiterbearbeitung, an eine im Fahrerhaus befindliche Wiedergabeeinrichtung geliefert werden, welche für den Fahrer dauerhaft und jederzeit einsehbar das entsprechend gesetzlich geforderte Sichtfeld oder mehrere Sichtfelder und ggf. ergänzende Information, wie z. B. Kollisionshinweise, Abstände und Ähnliches, für den Bereich rund um das Fahrzeug darstellt.

Ferner offenbart die DE 10 2011 010 624 A1 eine Anzeigevorrichtung für gesetzlich vorgeschriebene Sichtfelder eines Nutzfahrzeugs in einem Fahrerhaus des Nutzfahrzeugs, die mindestens eine Anzeigeeinheit aufweist, die dazu angepasst ist, mindestens zwei der gesetzlich vorgeschriebenen Sichtfelder dauerhaft und in Echtzeit auf der Anzeigeeinheit im Fahrerhaus anzuzeigen.

Aus der DE 10 2004 043 257 B4 ist eine Kameraeinheit und Vorrichtung zur Überwachung der Fahrzeugumgebung offenbart, bei der eine Änderung der Bildhöhe bezüglich einer Änderung des Bildwinkels in einem Randbereich des Bildes größer als in einem mittleren Bereich des Bildes ist.

Die EP 2 555 518 A1 offenbart eine Vorrichtung für ein Fahrzeug, die einen Bereich des toten Winkels an einem Fahrzeug erfasst, der außerhalb eines Sichtbereichs eines Seitenspiegels liegt. Dieses aufgenommene Bild wird daraufhin bearbeitet, so dass eine Geschwindigkeitsänderung eines darin enthaltenen anderen Objekts gleich der Geschwindigkeitsänderung dieses anderen Objekts im Seitenspiegel ist.

Ferner ist es bekannt, die gesetzlich vorgeschriebenen Sichtfelder eines Nutzfahrzeugs jeweils mit einer separaten Bildaufnahmeeinheit zu erfassen. Dabei sind die jeweiligen Bildaufnahmeeinheiten derart ausgerichtet, dass die optischen Achsen im Wesentlichen mittig durch die erfassten Sichtfelder verlaufen. Der Bereich des von der Bildaufnahmeeinheit erfassten Bilds weist auf der optischen Achse die hochwertigste Abbildungsqualität auf und die Verzeichnung, d. h. die optische Verzerrung, vergrößert sich mit zunehmendem Abstand zur optischen Achse.

Dabei werden an die Bildaufnahmeeinheiten zum Erfassen unterschiedlicher gesetzlich vorgeschriebener Sichtfelder auch unterschiedliche Anforderungen hinsichtlich der Verzeichnung gestellt. Beispielsweise darf ein erstes Sichtfeld nur geringe Verzeichnung aufweisen, wohingegen die Verzeichnung eines zweiten Sichtfelds weniger kritisch ist und somit verzerrter sein kann.

Außerdem ist es bekannt, mit nur einer Bildaufnahmeeinheit mehr als ein gesetzlich vorgeschriebenes Sichtfeld zu erfassen. In diesem Fall verläuft die optische Achse zentral durch den von der Bildaufnahmeeinheit erfassten Sichtbereich, was zu einer Verzeichnung in den jeweiligen miterfassten Sichtfeldern führen kann, da diese nicht unbedingt im zentralen Bereich liegen.

Davon ausgehend ist es Aufgabe der Erfindung ein einfaches Sichtsystem für ein Fahrzeug, insbesondere Nutzfahrzeug, bereitzustellen, das eine optimale Sicht auf sich seitlich neben dem Fahrzeug befindliche Bereiche gibt, das die Sichtfelder hinsichtlich ihrer optischen Verzerrungen mit einer gewünschten Abbildungsqualität darstellen kann.

Diese Aufgabe wird mit einem Fahrzeug, insbesondere Nutzfahrzeug, mit einem Sichtsystem, das die Merkmale des Anspruchs 1 aufweist, gelöst. Bevorzugte Ausführungsformen sind in den abhängigen Ansprüchen angegeben.

In der Beschreibung dieser Erfindung beziehen sich Richtungsangaben auf ein Fahrzeug, insbesondere Nutzfahrzeug, bei normaler Vorwärtsfahrt. In seitlicher Richtung bedeutet somit diejenige Richtung, die entlang der Senkrechten zu einem Vorwärtsfahrtrichtungsvektor des Kraftfahrzeugs ist und der Links-Rechts-Richtung entspricht. Ferner beschreibt der Begriff "Sichtbereich" einen Bereich, der von einer Bildaufnahmeeinheit, beispielsweise einer Kamera, maximal erfasst werden kann. Davon unterscheidet sich der Begriff eines "Sichtfelds", das einen Bereich angibt, der gesetzlich vorgeschrieben vom Fahrer eingesehen werden muss. Deshalb beschreibt ein Sichtbereich zumeist einen Bereich, der größer als ein gesetzlich vorgeschriebenes Sichtfeld ist.

Der Erfindung liegt der Gedanke zugrunde, ein Sichtsystem für ein Fahrzeug, insbesondere Nutzfahrzeug, vorzusehen, das eine Bildaufnahmeeinheit, eine mit der Bildaufnahmeeinheit in Verbindung stehende Berechnungseinheit und eine mit der Berechnungseinheit in Verbindung stehende Wiedergabeeinheit umfasst. Dabei ist anzumerken, dass die Bildaufnahmeeinheit, die Berechnungseinheit und die Wiedergabeeinheit in kommunikativer Weise miteinander in Verbindung stehen, und dass die Bildaufnahmeeinheit, die Berechnungseinheit und die Wiedergabeeinheit nicht zwangsweise voneinander getrennte Einheiten sind. Beispielsweise kann die Berechnungseinheit in der Bildaufnahmeeinheit oder in der Wiedergabeeinheit integriert sein. Des Weiteren ist unter dem Begriff Bildaufnahmeeinheit jede fototechnische Vorrichtung zum Erfassen von statischen oder bewegten Bildern zu verstehen, beispielsweise eine Kamera oder Weitwinkelkamera. Die Bildaufnahmeeinheit umfasst ein Objektiv mit einer optischen Achse und eine digitale Bilderfassungseinheit und ist dazu ausgebildet, derart an dem Fahrzeug angebracht zu werden, dass ein Sichtbereich mit zumindest einem Teil eines ersten gesetzlich vorgeschriebenen Sichtfelds und zumindest einem Teil eines zweiten gesetzlich vorgeschriebenen Sichtfelds auf der Seite des Fahrzeugs erfasst wird. Dementsprechend kann die Bildaufnahmeeinheit beispielsweise an einem vorderen Bereich einer Beifahrerseite des Fahrzeugs angebracht sein, um das beschriebene erste und zweite gesetzlich vorgeschriebene Sichtfeld zu erfassen. Das Objektiv ist bezüglich der digitalen Bilderfassungseinheit derart angeordnet, dass die optische Achse durch den auf der digitalen Bilderfassungseinheit abgebildeten Teil des ersten gesetzlich vorgeschriebenen Sichtfelds verläuft. Dies bedeutet, dass die optische Achse in der Regel nicht in der Bildmitte des auf der Bildererfassungseinheit erfassten Bildes liegt, sondern vielmehr in Richtung des Fahrzeugs und/oder ggf. zum Fahrerhaus des Fahrzeugs hin (nach vorne; entspricht oben auf dem Bild) verschoben ist.

Der Erfindung liegt außerdem der Gedanke zu Grunde, dass nur eine einzige Bildaufnahmeeinheit verwendet wird, um zwei sich seitlich neben dem Fahrzeug befindende, gesetzlich vorgeschriebene Sichtfelder zu erfassen und dennoch die Verzeichnung in den kritischen Bereichen des Aufnahmebilds so gering wie möglich zuhalten. Dazu wird die optische Achse derart verschoben, dass die optische Achse in den kritischen Bereich fällt, d. h. dass die optische Achse nicht in der Mitte des erfassten und dargestellten Aufnahmebilds liegt. Als kritischer Bereich kann beispielsweise das in der ECE Richtlinie R 46 definierte Sichtfeld II (Hauptaußenspiegelsichtfeld) genannt werden, das sich seitlich in unmittelbare Nähe des Fahrzeugs befindet. Es ist gewünscht, dass das dargestellte Sichtfeld II eine kleinstmögliche Verzeichnung aufweist. Um dies zu erreichen wird die optische Achse derart in Richtung des Fahrzeugs verschoben, dass die optische Achse durch das gesetzlich vorgeschriebene Sichtfeld II verläuft.

Ferner liegt der Erfindung die Idee zu Grunde, dass die Verwendung einer einzigen Bildaufnahmeeinheit, die zum Erfassen der beiden seitlichen Sichtfelder II und IV ausgebildet ist, auf einer Fahrzeugseite zu einem vereinfachten Sichtsystem führt. So muss die Berechnungseinheit eine geringere Menge an (Video-)Daten verarbeiten und kann deshalb z. B. die Echtzeitdarstellung des Aufnahmebildes verbessern. Ebenfalls sind weniger Datenverbindungen am Fahrzeug nötig, da pro Fahrzeugseite nur noch eine Bildaufnahmeeinheit bereitgestellt wird, die mit der Berechnungseinheit kommunikativ verbunden wird.

Vorzugsweise ist die Bildaufnahmeeinheit mit der Berechnungseinheit über eine erste Verbindung verbunden, beispielsweise ein geeignetes Datenkabel zur digitalen Übertragung der von der Bildaufnahmeeinheit erfassten Bilder. Die Berechnungseinheit ist ferner mit der Wiedergabeeinheit über eine zweite Verbindung verbunden, beispielsweise ein geeignetes Datenkabel zur digitalen Übertragung von Bildern. Alternativ kann eine oder beide der oben genannten Verbindungen auch drahtlos ausgeführt werden, beispielsweise über Bluetooth, WLAN oder eine Infrarotverbindung.

Das hierin offenbarte Sichtsystem kann einen Sichtbereich mit zumindest Teilen eines ersten und zweiten gesetzlich vorgeschriebenen Sichtfelds mit einer einzigen Bildaufnahmeeinheit erfassen, bei dem die Verzeichnung in den erfassten Teilen des ersten und zweiten gesetzlich vorgeschriebenen Sichtfelds vorgegebenen Anforderungen hinsichtlich der Abbildungsqualität entspricht, da die optische Achse durch den auf der digitalen Bildaufnahmeeinheit abgebildeten Teil desjenigen Sichtfelds verläuft, der kritischer hinsichtlich der Verzeichnung ist und demzufolge eine geringe Verzeichnung aufweisen darf. Insgesamt enthält vorzugsweise der von der Bildaufnahmeeinheit erfasste Sichtbereich das gesamte erste und zweite gesetzlich vorgeschriebene Sichtfeld.

Das von der Bildaufnahmeeinheit erfasste Bild ist im Allgemeinen ein zweidimensionales Bild, das im Wesentlichen der Form der digitalen Bilderfassungseinheit entspricht. Die digitale Bilderfassungseinheit wird im Folgenden als ein Objekt mit vernachlässigbarer Dickenausbreitung betrachtet, d. h. dass die digitale Bilderfassungseinheit als zweidimensionales Objekt betrachtet werden kann.

Im Wesentlichen verläuft die optische Achse orthogonal durch der digitalen Bilderfassungseinheit, damit ein hinsichtlich der Auflösung ein qualitativ hochwertiges Aufnahmebild erfasst werden kann. Vorzugsweise verläuft die optische Achse bezüglich des geometrischen Schwerpunkts der digitalen Bilderfassungseinheit exzentrisch, d. h. dass die optische Achse nicht durch den geometrischen Schwerpunkt der digitalen Bilderfassungseinheit verläuft. Als zweidimensionales Objekt weist somit die digitale Bilderfassungseinheit einen Flächenschwerpunkt auf, der von der optischen Achse bevorzugt nicht durchlaufen wird.

Ferner ist es bevorzugt, dass die digitale Bilderfassungseinheit eine im Wesentlichen symmetrische Form besitzt und demzufolge wenigstens eine Symmetrieachse aufweist, die in der von der digitalen Bilderfassungseinheit aufgespannten Ebene verläuft. Unter dem Begriff einer im Wesentlichen symmetrischen Form sind beispielsweise reguläre Polygone, wie beispielsweise Rechtecke und Quadrate, Kreise, Ellipsen, etc. zu verstehen, die wenigstens eine Symmetrieachse aufweisen. Außerdem sollen durch den Begriff einer "im Wesentlichen symmetrischen Form" auch solche Formen umfasst sein, die von einer symmetrischen Form leicht abweichen. Beispielsweise soll ein Rechteck mit z. B. einer oder mehreren schräg abgeschnittenen Ecken unter dem Begriff einer "im Wesentlichen symmetrischen Form" umfasst sein.

Vorzugsweise ist die optische Achse bezüglich wenigstens einer der Symmetrieachsen der digitalen Bilderfassungseinheit windschief, d. h. dass die optische Achse mindestens eine Symmetrieachse der digitalen Bilderfassungseinheit nicht schneidet.

Bei weiteren Ausgestaltungen ist es bevorzugt, dass die optische Achse durch die vertikale Mitte, einer Hoch-Tief-Richtung, des auf der digitalen Bilderfassungseinheit abgebildeten Teils des ersten gesetzlich vorgeschriebenen Sichtfelds verläuft. Dies führt bei dem von der digitalen Bilderfassungseinheit abgebildeten Teil des ersten gesetzlich vorgeschriebenen Sichtfelds zu einer gleichmäßig geringen Verzeichnung in horizontaler Richtung. Außerdem ist es bevorzugt, dass die optische Achse durch die horizontale Mitte, also einer Mitte in Rechts-Links-Richtung, des auf der digitalen Bilderfassungseinheit abgebildeten Teils des ersten gesetzlich vorgeschriebenen Sichtfelds verläuft. Dies führt auf dem von der digitalen Bilderfassungseinheit abgebildeten Teil des ersten gesetzlich vorgeschriebenen Sichtfelds zu einer gleichmäßig geringen Verzeichnung in vertikaler Richtung, insbesondere im vorzugsweise nahezu Verzeichnungsfrei darzustellenden Teil eines Bildes. Ferner ist es bevorzugt, dass die optische Achse durch das Flächenzentrum des auf der digitalen Bilderfassungseinheit abgebildeten Teils des ersten gesetzlich vorgeschriebenen Sichtfelds verläuft. Dies führt auf dem von der digitalen Bilderfassungseinheit abgebildeten Teil des ersten gesetzlich vorgeschriebenen Sichtfelds zu einer gleichmäßig geringen Verzeichnung in vertikaler und horizontaler Richtung im möglichst verzerrungsfrei darzustellenden Teil des Bildes.

Das erste gesetzlich vorgeschriebene Sichtfeld entspricht vorzugsweise dem in der ECE Richtlinie R 46 definierten Sichtfeld II für Hauptaußenspiegel und das zweite gesetzlich vorgeschriebene Sichtfeld entspricht vorzugsweise dem in der ECE Richtlinie R 46 definierten Sichtfeld IV für Weitwinkel-Außenspiegel. Dabei ist es bevorzugt, dass das Hauptaußenspiegelsichtfeld II nur wenig Verzeichnung aufweisen soll, wohingegen die Verzeichnung in dem Weitwinkel-Außenspiegelsichtfeld IV weniger kritisch ist. Da die optische Achse durch den auf der digitalen Bilderfassungseinheit abgebildeten Teil des Hauptaußenspiegelsichtfelds II verläuft, ist die Verzeichnung in diesem am geringsten und kann dem Fahrer des Fahrzeugs in gewünschter Qualität bereitgestellt werden. Zwar ist dadurch die Verzeichnung in dem Weitwinkel-Außenspiegelsichtfeld IV größer, aber aufgrund der oben beschriebenen Tatsache, dass diese Verzeichnung weniger kritisch ist, ist die geringere Abbildungsqualität des Weitwinkel-Außenspiegelsichtfeld IV akzeptierbar.

Vorzugsweise ist die Berechnungseinheit dazu ausgebildet, ein von der Bildaufnahmeeinheit erfasstes Bild zu empfangen und zu einem Wiedergabebild derart zu modifizieren, dass der von der Bildaufnahmeeinheit erfasste Teil des ersten gesetzlich vorgeschriebenen Sichtfelds und der erfasste Teil des zweiten gesetzlich vorgeschriebenen Sichtfelds im Wiedergabebild enthalten ist. Die Wiedergabeeinheit ist dazu ausgebildet, im Inneren des Fahrzeugs durch den Fahrer einsehbar angeordnet zu sein und das von der Berechnungseinheit empfangene Wiedergabebild darzustellen. Die Berechnungseinheit kann mit einer der Bildaufnahmeeinheiten, der Wiedergabeeinheit oder dem Steuergerät des Fahrzeugs integral ausgeführt werden. Des Weiteren kann die Berechnungseinheit als separate Einheit im oder am Fahrzeug angebracht werden, z. B. integral mit einem Bordcomputer. Die Wiedergabeeinheit kann eine Einheit sein, die in geeigneter Weise das von der Berechnungseinheit bereitgestellte Wiedergabebild für den Fahrer des Fahrzeugs einsehbar darstellt. Beispielsweise kann die Wiedergabeeinheit ein separates Gerät, beispielsweise ein LCD, ein LED, ein Projektor oder ähnliches sein. Außerdem kann die Wiedergabeeinheit mit dem sogenannten Central Information Display, das sich bereits standardmäßig im Fahrzeug befinden kann, integral ausgeführt sein.

Ferner ist es bevorzugt, dass die Wiedergabeeinheit dazu ausgebildet ist, das empfangene Wiedergabebild dauerhaft darzustellen. Dauerhaft bedeutet hier, dass die Darstellung der Sichtfelder nicht durch andere Angaben (zeitlich) unterbrochen wird, so dass der Fahrer jederzeit bei einem Blick auf die Wiedergabeeinheit das erste und zweite gesetzlich vorgeschriebene Sichtfeld einsehen kann. Dauerhaft bedeutet aber auch, dass die Darstellung der Sichtfelder wenigstens im Fahrbetrieb des Nutzfahrzeugs durchgängig vorhanden ist. Der Zustand, der mit dauerhaft beschrieben und davon umfasst werden soll, kann auch optional auf den Zündzustand des Fahrzeugs oder beispielsweise einen Zustand, in dem sich ein Fahrer im Fahrzeug befinden kann, z. B. abhängig vom Erfassen einer sich in der Nähe des Fahrzeugs bzw. im Fahrzeug befindenden Schlüsseleinrichtung, ausgeweitet werden.

Vorzugsweise weist die Bildaufnahmeeinheit ein Gehäuse auf, in dem die digitale Bilderfassungseinheit und eine Haltevorrichtung für die digitale Bilderfassungseinheit angeordnet und im Inneren des Gehäuses befestigt ist, wobei das Objektiv, das beispielsweise ein panamorphes Objektiv sein kann, an dem Gehäuse angebracht ist. Die digitale Bilderfassungseinheit ist vorzugsweise an der Haltevorrichtung mittels Kleben, Schweißen, Löten, etc. befestigt. Das Objektiv ist z. B. an dem Gehäuse vorzugsweise über ein Gewinde befestigt. Im hier verwendeten Sinn umfasst das Objektiv ein Linsenssystem mit wenigstens einer Linse zum Fokussieren des zu erfassenden Bildes und in manchen Ausführungsformen eine Blende zum Ablichten. Die Blende weist vorzugsweise eine Öffnung auf, durch deren Mitte die optische Achse verläuft. Dabei ist anzumerken, dass der Verlauf der optischen Achse auch durch eine spezielle Anordnung der wenigstens einen Linse und, wie oben beschrieben, der Blende, wenn vorhanden, beeinflusst werden kann. Außerdem kann durch ein Verdrehen des Objektivs in dem Gewinde der axiale Abstand zwischen dem Objektiv und der digitalen Bilderfassungseinheit derart eingestellt werden, dass die Fokussierung des zu erfassenden Bildes optimal ist. Dies geschieht jedoch zumeist werkseitig und damit einmalig bei der Befestigung des Objektivs.

Um zu erreichen, dass die optische Achse durch den auf der digitalen Bilderfassungseinheit abgebildeten Teil des ersten gesetzlich vorgeschriebenen Sichtfelds verläuft, kann beispielsweise die digitale Bilderfassungseinheit zentrisch auf der Haltevorrichtung befestigt sein, wobei das Objektiv derart am Gehäuse befestigt ist, dass es bezüglich der Haltevorrichtung und dementsprechend auch bezüglich der digitalen Bilderfassungseinheit exzentrisch angeordnet ist. Hierbei kann das Objektiv über einen Objektivhalter am Gehäuse befestigt sein, der ein bezüglich der digitalen Bilderfassungseinheit exzentrisch angeordnetes Gewinde umfasst, das das Objektiv schraubbar aufnehmen kann. Alternativ kann das Objektiv am Objektivhalter durch Kleben, Klemmen oder Schauben oder ähnliches befestigt sein, wobei vorzugsweise die Verbindung zwischen Objektiv und Objektivhalter so ist, dass sie zumindest werkseitig einmalig einstellbar und justierbar ist. In einer weiteren bevorzugten Ausgestaltung sind die Haltevorrichtung und das Objektiv zueinander konzentrisch ausgerichtet und die digitale Bilderfassungseinheit ist auf der Haltevorrichtung exzentrisch dazu befestigt, d. h. dass der Flächenschwerpunkt der Befestigungsfläche der Haltevorrichtung bezüglich des Flächenschwerpunkts der digitalen Bilderfassungseinheit exzentrisch ist.

Die digitale Bilderfassungseinheit ist vorzugsweise ein CMOS-Sensor, der lichtempfindliche elektronische Bauelemente enthält, die auf dem inneren Photoeffekt beruhen. Der CMOS-Sensor kann eine vernachlässigbare Dicke aufweisen, so dass der CMOS-Sensor als zweidimensionale digitale Bilderfassungseinheit betrachtet werden kann, die auf der Haltevorrichtung befestigt ist. Vorzugsweise weist die digitale Bilderfassungseinheit eine Auflösung von mindestens zwei Megapixeln auf.

Das offenbarte Sichtsystem ist bevorzugt an einem Fahrzeug, insbesondere Nutzfahrzeug, angebracht, wobei die digitale Bildaufnahmeeinheit derart an dem Fahrzeug befestigt ist, dass sie einen Sichtbereich mit zumindest einem Teil eines ersten gesetzlich vorgeschriebenen Sichtfelds und zumindest einem Teil eines zweiten gesetzlich vorgeschriebenen Sichtfelds auf einer Seite des Fahrzeugs erfassen kann. Vorzugsweise erfasst die Bildaufnahmeeinheit den Sichtbereich mit den Teilen des ersten und zweiten gesetzlich vorgeschriebenen Sichtfelds aus einer Vogelperspektive, d. h. dass ein sich in dem Sichtbereich befindlicher Gegenstand von einem schräg darüber gelegenen Augenpunkt aus betrachtet wird. Mit Hilfe der Erfassung des Sichtbereichs aus der Vogelperspektive kann der Fahrer des Fahrzeugs in das erste und zweite gesetzlich vorgeschriebene Sichtfeld verbessert einsehen und, aufgrund der verbesserten Abbildungsqualität in dem abgebildeten Teil des ersten gesetzlich vorgeschriebenen Sichtfeld, Verkehrshindernisse wie beispielsweise Passanten und andere Verkehrsteilnehmer frühzeitig erkennen.

Ferner ist es bevorzugt, dass die Bildaufnahmeeinheit derart am Fahrzeug, insbesondere Nutzfahrzeug, angebracht ist, dass der Sichtbereich in Vorwärtsrichtung des Fahrzeugs von vorne nach hinten erfasst wird. Ein Erfassen eines Sichtbereichs von vorne nach hinten bedeutet eine Sichtbereichserfassung in einer Richtung, die im Wesentlichen parallel zu einer Längsrichtung des Fahrzeugs bzw. einer Rückwärtsfahrtrichtung des Fahrzeugs ist.

Das offenbarte Sichtsystem weist bevorzugt eine Bildaufnahmeeinheit mit einer einzigen digitalen Bilderfassungseinheit auf, die zum Erfassen von wenigstens einem Teil eines ersten gesetzlich vorgeschriebenen Sichtfelds und wenigstens einem Teils eines zweiten gesetzlich vorgeschriebenen Sichtfelds ausgebildet ist. Die Bildaufnahmeeinheit weist somit nicht zwei digitale Bilderfassungseinheiten auf, die jeweils zum separaten Erfassen der Teile des ersten und zweiten Sichtfelds ausgebildet sind.

Ferner kann es vorteilhaft sein, dass das Sichtsystem eine weitere Bildaufnahmeeinheit aufweist, die ebenfalls ein Objektiv mit einer optischen Achse und eine einzige digitale Bilderfassungseinheit umfasst. In diesem Fall ist die weitere Bildaufnahmeeinheit dazu ausgebildet, einen Sichtbereich mit zumindest einem Teil eines ersten gesetzlich vorgeschriebenen Sichtfelds und wenigstens einen Teil eines zweiten gesetzlich vorgeschriebenen Sichtfelds auf der Seite des Fahrzeugs zu erfassen, die der Seite der ersten Bildaufnahmeeinheit gegenüberliegt. Hierbei kann die Wiedergabeeinheit ferner dazu ausgebildet sein, die beiden erfassten Sichtbereiche im Inneren des Fahrzeugs durch den Fahrer einsehbar im Split-Screen-Verfahren darzustellen. Dabei wird bevorzugt der erfasste Sichtbereich der Fahrerseite fahrerseitig auf der Wiedergabeeinheit dargestellt und der erfasste Sichtbereich der Beifahrerseite beifahrerseitig auf der Wiedergabeeinheit dargestellt. So kann der Fahrer durch einen Blick auf die Wiedergabeeinheit in beide Sichtbereiche seitlich des Fahrzeugs einsehen. Alternativ können die beidseitig erfassten Sichtbereiche getrennt voneinander auf zwei Wiedergabeeinheiten dargestellt werden.

Mit dem hierin offenbarten Sichtsystem ist es möglich, ein erstes gesetzlich vorgeschriebenes Sichtfeld und ein zweites gesetzlich vorgeschriebenes Sichtfeld, beispielsweise die in der ECE Richtlinie R 46 definierten Sichtfelder II und IV, mit nur einer digitalen Bilderfassungseinheit, beispielsweise einem CMOS-Sensor, zu erfassen, die den Anforderungen der jeweiligen Abbildungsgüte entsprechen. Durch die Verwendung von nur einer digitalen Bilderfassungseinheit ist somit ein kostengünstiges Sichtsystem offenbart, das ferner auch geringere technische Umsetzungskosten verursacht, da die exzentrische Anordnung der oben erläuterten Elemente der Bildaufnahmeeinheit bereits in der Entwicklung einfließen können. Außerdem ist die Umstellung für den Fahrer von einem Weitwinkelspiegel auf das hierin offenbarte Sichtsystem unkritisch, da er das Weitwinkelsichtfeld mit gewohnter Verzeichnung dargestellt bekommt.

Nachfolgend wird die Erfindung beispielhaft anhand der beigefügten Figuren beschrieben, in denen:
- Fig. 1: eine schematische Darstellung eines Sichtsystems zeigt;
- Fig. 2: eine schematische Darstellung eines an einem Nutzfahrzeug angebrachten Sichtsystems und der gesetzlichen Sichtfelder zeigt;
- Fig. 3: eine schematische Darstellung einer Bildaufnahmeeinheit des Sichtsystems zeigt; und
- Fig. 4: eine schematische Darstellung eines von der Bildaufnahmeeinheit der Fig. 3 erfassten Sichtbereichs zeigt.

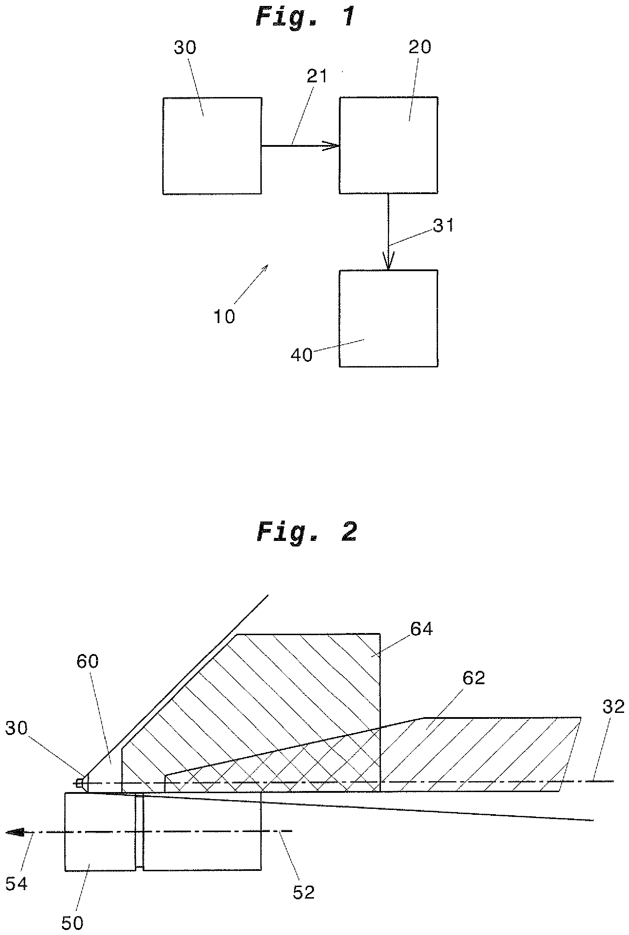

Die Fig. 1 zeigt schematisch ein Sichtsystem 10. Das Sichtsystem 10, das beispielsweise an einem Nutzfahrzeug wie einem Lastkraftwagen verwendet werden kann, umfasst wenigstens eine Bildaufnahmeeinheit 30, eine Berechnungseinheit 20 und eine Wiedergabeeinheit 40. Der von der Aufnahmeeinheit 30 erfasste Sichtbereich wird einer Berechnungseinheit 20 über eine erste Verbindung 21, beispielsweise ein geeignetes Datenkabel zur digitalen Übertragung der von der Bildaufnahmeeinheit 30 erfassten Bilder, bereitgestellt. Die Berechnungseinheit 20 kann dazu ausgebildet sein, die erfassten Bilder zu einem Wiedergabebild in einer gewünschten Weise zu modifizieren. Beispielsweise kann die Berechnungseinheit 20 ein von der Bildaufnahmeeinheit 30 empfangenes Bild dahingehend bearbeiten, dass bestimmte Verkehrsobjekte in dem Bild erkannt und gekennzeichnet werden. Das von der Berechnungseinheit 20 modifizierte Wiedergabebild wird dann der Wiedergabeeinheit 40 über eine zweite Verbindung 31, beispielsweise ein geeignetes Datenkabel zur digitalen Übertragung von Bildern, bereitgestellt. Die Wiedergabeeinheit 40 ist dazu angepasst, das Wiedergabebild einem Fahrer des Nutzfahrzeugs 50 einsehbar fotorealistisch darzustellen.

Die Berechnungseinheit 20 muss nicht zwingend eine Bearbeitung des von der Bildaufhahmeeinheit 30 erfassten Bildes durchführen. In manchen Ausführungsformen ist die Berechnungseinheit 20 dazu ausgebildet, das von der Bildaufnahmeeinheit 30 erfasste Bild unverändert als Wiedergabebild der Wiedergabeeinheit 40 bereitzustellen.

Unter Bezugnahme auf die Fig. 2 ist ein Nutzfahrzeug 50 dargestellt, das eine Längsachse 52 aufweist, die sich im Wesentlichen parallel zu der Vorwärtsfahrtrichtung erstreckt, die durch einen Pfeil 54 dargestellt ist. Wie in der Fig. 2 dargestellt ist, befindet sich die Bildaufnahmeeinheit 30 auf der Beifahrerseite des Nutzfahrzeugs 50. Das in der Fig. 2 dargestellte Nutzfahrzeug 50 ist ein linksgelenktes Fahrzeug. Das Nutzfahrzeug 50 kann aber auch ein rechtsgelenktes Fahrzeug sein. Außerdem ist aus Gründen der Vereinfachung nur eine Bildaufnahmeeinheit 30 gezeigt. Das offenbarte Sichtsystem 10 kann aber auch auf der Fahrerseite des Nutzfahrzeugs 50 eine weitere Bildaufnahmeeinheit umfassen, die eine ähnliche Konfiguration wie die der beschriebenen Bildaufnahmeeinheit 30 der Beifahrerseite aufweist.

Die in der Fig. 2 dargestellte Bildaufnahmeeinheit 30 ist derart am Nutzfahrzeug 50 befestigt, dass sie einen Sichtbereich 60 erfassen kann, der sich seitlich neben dem Nutzfahrzeug 50 befindet und sich im Wesentlichen von vorne nach hinten bis zum Horizont erstreckt. Die Bildaufnahmeeinheit 30 ist dabei derart ausgebildet, dass der Sichtbereich 60 wenigstens einen Teil eines erstes gesetzlich vorgeschriebenen Sichtfelds 62, das beispielsweise dem in der ECE Richtlinie R 46 definierten Sichtfeld II für Hauptaußenspiegel entspricht, und wenigstens einen Teil eines zweiten gesetzlich vorgeschriebenen Sichtfelds 64, das beispielsweise dem in der ECE Richtlinie R 46 definierten Sichtfeld IV für Weitwinkel-Außenspiegel entspricht, enthält. Wie in der Fig. 2 gezeigt, enthält der von der Bildaufnahmeeinheit 30 erfasste Sichtbereich 60 das erste und zweite gesetzlich vorgeschriebene Sichtfeld 62, 64 vollständig.

Ferner umfasst die Bildaufnahmeeinheit 30 eine optische Achse 32, die sich im Wesentlichen parallel zu der Längsachse 52 des Nutzfahrzeugs 50 erstreckt. Wie in der Fig. 2 dargstellt, verläuft die optische Achse 32 durch das erste gesetzlich vorgeschriebene Sichtfeld 62 und muss demzufolge nicht zwangsweise zentrisch durch den Sichtbereich 60 verlaufen. Da die optische Achse 32 durch das erste gesetzlich vorgeschriebene Sichtfeld 62 verläuft, weist der von der Wiedergabeeinheit 40 dem Fahrer des Nutzfahrzeugs 50 dargestellte Bereich des erfassten Teils des ersten gesetzlich vorgeschriebenen Sichtfelds 62 eine geringere Verzeichnung und höhere Abbildungsqualität auf als der Bereich des erfassten Teils des zweiten gesetzlich vorgeschriebenen Sichtfelds 64.

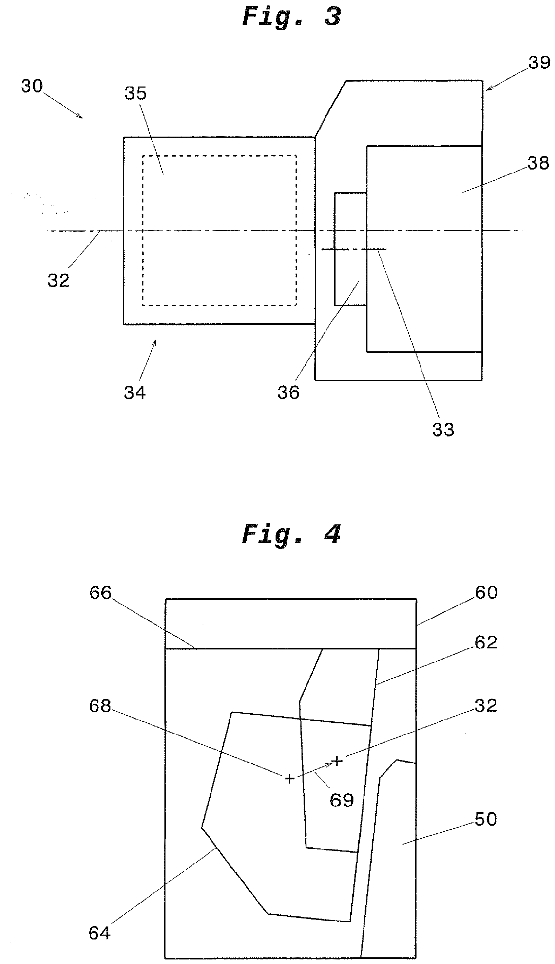

Mit Bezug auf die Fig. 3 ist beispielhaft die Bildaufnahmeeinheit 30 mit ihren Einzelkomponenten dargestellt. Die Bildaufnahmeeinheit 30 umfasst ein Objektiv 34, eine digitale Bilderfassungseinheit 36, eine Haltevorrichtung 38 und ein Gehäuse 39, in dem die digitale Bilderfassungseinheit 36 und die Haltevorrichtung 38 angeordnet sind. Das Objektiv 34 enthält ein Linsen- und Blendensystem 35, die im Wesentlichen den Verlauf der optischen Achse 32 definieren und durch deren Anordnung beeinflussen können. Das Objektiv 34 ist an dem Gehäuse 39 beispielsweise über ein Gewinde (nicht dargestellt) angebracht. Wie in der Fig. 3 gezeigt, ist die digitale Bilderfassungseinheit 36 an der Haltevorrichtung 38 befestigt, die wiederum an einer Innenseite des Gehäuses 39 angebracht ist, um die digitale Bilderfassungseinheit 36 definiert zu halten. Die in der Fig. 3 gezeigte digitale Bilderfassungseinheit 36 ist auf der Haltevorrichtung 38 exzentrisch befestigt, so dass die digitale Bilderfassungseinheit 36 auch bezüglich des Objektivs 34 exzentrisch befestigt ist. Dabei zeigt die gestrichelte Linie 33 eine zu der digitalen Bilderfassungseinheit 36 orthogonale Achse an, die durch den Flächenschwerpunkt der digitalen Bilderfassungseinheit verläuft und zu der optischen Achse 32 beabstandet ist.

Die Fig. 4 zeigt exemplarisch einen von der Bildaufnahmeeinheit 20 erfassten Sichtbereich 60, der das erste gesetzlich vorgeschriebene Sichtfeld 62 und das zweite gesetzlich vorgeschriebene Sichtfeld 64 vollständig umfasst. Der Sichtbereich 60 kann von der Berechnungseinheit 20 modifiziert oder, wie in der Fig. 4 dargestellt, unverändert auf der Wiedergabeeinheit 40 als Wiedergabebild dargestellt werden. In der Fig. 4 ist ebenfalls der Horizont 66 und noch ein Teilbereich des Nutzfahrzeugs 50 gezeigt, der von der Bildaufnahmeeinheit 30 miterfasst wird, damit sich der Fahrer des Nutzfahrzeugs 50 schnell und leicht auf dem Wiedergabebild orientieren kann.

In der Fig. 4 wird außerdem ersichtlich, dass die optische Achse 32 aus dem Zentrum 68 des Sichtbereichs 60 um eine Exzentrizität 69 verschoben ist. Das Zentrum 68 liegt zwar innerhalb des zweiten gesetzlich vorgeschriebenen Sichtfelds 64, jedoch außerhalb des ersten gesetzlich vorgeschrieben Sichtfelds 62, welches das kritische Sichtfeld ist. Wie bereits erwähnt soll die optische Achse 32 derart aus dem Zentrum 68 des Sichtbereichs 60 verschoben sein, dass die optische Achse 32 durch das bzgl. Verzerrung des Bilds kritische erste gesetzlich vorgeschriebenen Sichtfeld 62 verläuft. Gemäß der Fig. 4 ist eine Ausführungsform dargestellt, in der die optische Achse 32 nahezu in der horizontalen Mitte des gesetzlich vorgeschriebenen Sichtfelds 62 liegt. Demzufolge ist die optische Verzerrung des auf dem Wiedergabebild dargestellten ersten gesetzlich vorgeschriebenen Sichtfeld 62 gering und die Darstellung des ersten gesetzlich vorgeschriebenen und kritischen Sichtfelds 62 besser. Bevorzugt wird die optische Achse 32 jedoch soweit verschoben, dass sie durch das Zentrum, gebildet durch den Flächenschwerpunkt, des ersten gesetzlich vorgeschriebenen Sichtfelds 62 verläuft.

### Bezugszeichenliste

- 10: Sichtsystem
- 20: Berechnungseinheit
- 21: erste Verbindung
- 20: Berechnungseinheit
- 31: zweite Verbindung
- 32: optische Achse
- 33: Achse der digitalen Bilderfassungseinheit
- 34: Objektiv
- 35: Linsen- und Blendensystem
- 36: digitale Bilderfassungseinheit
- 38: Haltevorrichtung
- 39: Gehäuse
- 40: Wiedergabeeinheit
- 50: Nutzfahrzeug
- 52: Längsachse des Nutzfahrzeugs
- 54: Vorwärtsfahrtrichtung
- 60: Sichtbereich
- 62: erstes gesetzlich vorgeschriebene Sichtfeld
- 64: zweites gesetzlich vorgeschriebene Sichtfeld
- 66: Horizont
- 68: Zentrum des Sichtbereichs
- 69: Exzentrizität

## Patentansprüche

1. Fahrzeug (50), insbesondere Nutzfahrzeug, mit einem Sichtsystem (10), wobei das Sichtsystem (10) aufweist:
eine am Fahrzeug (50) angebrachte Bildaufnahmeeinheit (30), eine mit der Bildaufnahmeeinheit (30) in Verbindung stehende Berechnungseinheit (20) und eine mit der Berechnungseinheit (20) in Verbindung stehende Wiedergabeeinheit (40),
wobei die Bildaufnahmeeinheit (30) ein Objektiv (34) mit einer optischen Achse (32) und eine digitale Bilderfassungseinheit (36) umfasst und die Bildaufnahmeeinheit so am Fahrzeug (50) angebracht ist, dass sie bei Verwendung einen Sichtbereich (60) mit zumindest einem Teil eines ersten gesetzlich vorgeschriebenen Sichtfelds (62) und zumindest einem Teil eines zweiten gesetzlich vorgeschriebenen Sichtfelds (64) auf der Seite des Fahrzeugs (50) erfasst, und
wobei das erste gesetzliche Sichtfeld so beschaffen ist, dass der Fahrzeugführer mindestens einen ebenen und horizontalen Teil der Fahrbahn von 5 m Breite einsehen kann, der fahrzeugseitig begrenzt ist durch eine zur senkrechten Längsmittelebene des Fahrzeugs parallele, durch den äußersten Punkt auf der Fahrerseite bzw. der Beifahrerseite des Fahrzeugs verlaufende Ebene, und der sich vom Horizont bis 30 m hinter den Augenpunkten des Fahrzeugführers erstreckt, und dass der Fahrzeugführer einen 1 m breiten Streifen der Fahrbahn einsehen kann, der fahrzeugseitig begrenzt ist durch eine zur senkrechten Längsmittelebene des Fahrzeugs parallele, durch den äußersten Punkt auf der Fahrerseite bzw. Beifahrerseite des Fahrzeugs verlaufende Ebene, und der 4 m hinter der durch die Augenpunkte des Fahrzeugführers verlaufenden senkrechten Ebene beginnt,
wobei das Objektiv (34) derart bezüglich der digitalen Bilderfassungseinheit (36) angeordnet ist, dass die optische Achse (32) durch den auf der digitalen Bilderfassungseinheit (36) abgebildeten Teil des ersten gesetzlich vorgeschriebenen Sichtfelds (62) verläuft, und
wobei die optische Achse (32) derart in Richtung des Fahrzeuges (50) verschoben ist, dass sie durch den Teil des ersten gesetzlichen Sichtfelds verläuft.

2. Fahrzeug (50) nach Anspruch 1, wobei die optische Achse (32) bezüglich des geometrischen Schwerpunkts der digitalen Bilderfassungseinheit (36) exzentrisch verläuft.

3. Fahrzeug (50) nach einem der vorhergehenden Ansprüche, wobei die digitale Bilderfassungseinheit (36) im Wesentlichen symmetrisch ist und wenigstens eine Symmetrieachse aufweist.

4. Fahrzeug (50) nach Anspruch 3, wobei die optische Achse (32) bezüglich wenigstens einer der Symmetrieachsen der digitalen Bilderfassungseinheit (36) windschief verläuft.

5. Fahrzeug (50) nach einem der vorhergehenden Ansprüche, wobei die optische Achse (32) durch die vertikale Mitte des auf der digitalen Bilderfassungseinheit (36) abgebildeten Teils des ersten gesetzlich vorgeschriebenen Sichtfelds (62) verläuft.

6. Fahrzeug (50) nach einem der vorhergehenden Ansprüche, wobei die optische Achse (32) durch die horizontale Mitte des auf der digitalen Bilderfassungseinheit (36) abgebildeten Teils des ersten gesetzlich vorgeschriebenen Sichtfelds (62) verläuft.

7. Fahrzeug (50) nach einem der vorhergehenden Ansprüche, wobei die optische Achse (32) durch das Flächenzentrum des auf der digitalen Bilderfassungseinheit (36) abgebildeten Teils des ersten gesetzlich vorgeschriebenen Sichtfelds (62) verläuft.

8. Fahrzeug (50) nach einem der vorhergehenden Ansprüche, wobei das zweite gesetzliche Sichtfeld (64) dem in der ECE Richtlinie R 46 definierten Sichtfeld IV für Weitwinkel-Außenspiegel entspricht, das so beschaffen ist, dass der Fahrzeugführer mindestens einen ebenen und horizontalen Teil der Fahrbahn von 15 m Breite einsehen kann, der fahrzeugseitig begrenzt ist durch eine zur senkrechten Längsmittelebene des Fahrzeugs parallele, durch den äußersten Punkt auf der Fahrerseite bzw. Beifahrerseite des Fahrzeugs verlaufende Ebene, und der sich mindestens von 10 m bis 25 m hinter den Augenpunkten des Fahrzeugführers erstreckt, und dass der Fahrzeugführer einen 4,5 m breiten Streifen der Fahrbahn einsehen kann, der fahrzeugseitig begrenzt ist durch eine zur senkrechten Längsmittelebene des Fahrzeugs parallele, durch den äußersten Punkt auf der Fahrerseite bzw. Beifahrerseite des Fahrzeugs verlaufende Ebene, und der 1,5 m hinter der durch die Augenpunkte des Fahrzeugführers verlaufenden senkrechten Ebene beginnt,

9. Fahrzeug (50) nach einem der vorhergehenden Ansprüche, wobei die Berechnungseinheit (20) dazu ausgebildet ist, ein von der Bildaufnahmeeinheit (30) erfasstes Bild zu empfangen und zu einem Wiedergabebild derart zu modifizieren, dass der von der Bildaufnahmeeinheit (30) erfasste Teil des ersten gesetzlich vorgeschriebenen Sichtfelds (62) und der erfasste Teil des zweiten gesetzlich vorgeschriebenen Sichtfelds (64) im Wiedergabebild enthalten ist, und
die Wiedergabeeinheit (40) dazu ausgebildet ist, im Inneren des Fahrzeugs (50) durch den Fahrer einsehbar angeordnet zu sein und das von der Berechnungseinheit (20) empfangene Wiedergabebild darzustellen,
wobei die Wiedergabeeinheit (40) insbesondere dazu ausgebildet ist, das von der Berechnungseinheit (20) empfangene Wiedergabebild dauerhaft darzustellen.

10. Fahrzeug (50) nach einem der vorhergehenden Ansprüche, wobei die Bildaufnahmeeinheit (30) ferner ein Gehäuse (39) aufweist, in dem die digitale Bilderfassungseinheit (36) und eine Haltevorrichtung (38) für die digitale Bilderfassungseinheit (36) angeordnet sind, und wobei das Objektiv (34) an dem Gehäuse (39) befestigt ist.

11. Fahrzeug (50) nach Anspruch 10, wobei das Objektiv (34) bezüglich der Haltevorrichtung (38) und der digitalen Bilderfassungseinheit (30) exzentrisch angeordnet ist.

12. Fahrzeug (50) nach Anspruch 10, wobei die digitale Bilderfassungseinheit (36) bezüglich der Haltevorrichtung (38) und dem Objektiv (34) exzentrisch angeordnet ist,
wobei die digitale Bilderfassungseinheit (36) insbesondere ein CMOS oder CCD-Sensor ist.

13. Fahrzeug (50) nach einem der vorhergehenden Ansprüche, wobei die Bildaufnahmeeinheit (30) ferner dazu ausgebildet ist, den Sichtbereich (60) aus einer Vogelperspektive zu erfassen.

14. Fahrzeug (50) nach einem der vorhergehenden Ansprüche, wobei die Bildaufnahmeeinheit (30) derart an einer Seite des Fahrzeugs (50) angebracht ist, dass der Sichtbereich (60) in Vorwärtsfahrtrichtung des Fahrzeugs (50) von vorne nach hinten erfasst wird.

15. Fahrzeug (50) nach einem der vorhergehenden Ansprüche, wobei die Bildaufnahmeeinheit (30) eine einzige digitale Bilderfassungseinheit (36) zum Erfassen der Teile des ersten und zweiten gesetzlich vorgeschriebenen Sichtfelds (62, 64) umfasst.

## Claims

1. Vehicle (50), in particular commercial vehicle, which is equipped with a viewing system (10), wherein the viewing system (10) comprises:
an image capture unit (30) attached to the vehicle (50), a computing unit (20) connected to the image capture unit (30), and a reproducing unit (40) connected to the computing unit (20),
wherein the image capture unit (30) comprises a lens (34), which has an optical axis (32), and a digital image sensing unit (36), wherein the image capture unit (30) is attached to the vehicle such that, in use, a viewing area (60) on the side of the vehicle (50) is sensed with at least a part of a first legally-prescribed field of view (62) and at least a part of a second legally-prescribed field of view (64), and
wherein the first legally-prescribed field of view is configured such that the driver can see at least a 5 m wide, flat, horizontal portion of the road, which is bounded by a plane parallel to the median longitudinal vertical plane and passing through the outermost point of the vehicle on the driver's side and the passenger's side of the vehicle, respectively, and which extends from 30 m behind the driver's eye to the horizon, and such that the driver can see the road over a width of 1 m, which is bounded by a plane parallel to the median longitudinal vertical plane and passing through the outermost point of the vehicle starting from a point 4 m behind the vertical plane passing through the driver's eye,
wherein the lens (34) is disposed with respect to the digital image sensing unit (36) such that the optical axis (32) extends through the part of the first legally-prescribed field of view (62) that is reproduced on the digital image sensing unit (36), and
wherein the optical axis (32) is shifted towards the vehicle (50) such that the optical axis extends through the part of the first legally-prescribed field of view.

2. Vehicle (50) according to claim 1, wherein the optical axis (32) extends eccentrically with respect to the geometric center of gravity of the digital image sensing unit (36).

3. Vehicle (50) according to one of the preceding claims, wherein the digital image sensing unit (36) is substantially symmetric and has at least one axis of symmetry.

4. Vehicle (50) according to claim 3, wherein the optical axis (32) extends skewed with respect to at least one of the axes of symmetry of the digital image sensing unit (36).

5. Vehicle (50) according to one of the preceding claims, wherein the optical axis (32) extends through the vertical center of the part of the first legally-prescribed field of view (62) that is reproduced on the digital image sensing unit (36).

6. Vehicle (50) according to one of the preceding claims, wherein the optical axis (32) extends through the horizontal center of the part of the first legally-prescribed field of view (62) that is reproduced on the digital image sensing unit (36).

7. Vehicle (50) according to one of the preceding claims, wherein the optical axis (32) extends through the surface center of the part of the first legally-prescribed field of view (62) that is reproduced on the digital image sensing unit (36).

8. Vehicle (50) according to one of the preceding claims, wherein the second legally-prescribed field of view (64) corresponds to the field of view IV defined in the UN/ECE Regulation No. 46 for wide-angle exterior mirrors, which is configured such that the driver can see at least a 15 m wide, flat, horizontal portion of the road, which is bounded by a plane parallel to the median longitudinal vertical plane and passing through the outermost point of the vehicle the driver's side and the passenger's side of the vehicle, respectively, and which extends from at least 10 m to 25 m behind the driver's eye, and such that the driver can see the road over a width of 4.5 m, which is bounded by a plane parallel to the median longitudinal vertical plane and passing through the outermost point of the vehicle starting from a point 1.5 m behind the vertical plane passing through the driver's eye.

9. Vehicle (50) according to one of the preceding claims, wherein
the computing unit (20) is configured to receive an image sensed by the image capture unit (30) and to modify it into a reproduced image such that the part of the first legally-prescribed field of view (62) sensed by the image capture unit (30) and the sensed part of the second legally-prescribed field of view (64) are contained in the reproduced image, and
the reproducing unit (40) is configured to be disposed in the interior of the vehicle (50) so as to be viewable by the driver and to display the reproduced image received from the computing unit (20),
wherein preferably the reproducing unit (40) is configured to permanently display the reproduced image received from the computing unit (20).

10. Vehicle (50) according to one of the preceding claims, wherein the image capture unit (30) further includes a housing (39), in which the digital image sensing unit (36) and a holding device (38) for the digital image sensing unit (36) are disposed, and wherein the lens (34) is attached to the housing (39).

11. Vehicle (50) according to claim 10, wherein the lens (34) is disposed eccentric with respect to the holding device (38) and with respect to the digital image sensing unit (36).

12. Vehicle (50) according to claim 10, wherein the digital image sensing unit (36) is disposed eccentric with respect to the holding device (38) and the lens (34),
wherein preferably the digital image sensing unit (36) is a CMOS or CCD sensor.

13. Vehicle (50) according to one of the preceding claims, wherein the image capture unit (30) is further configured to sense the viewing area (60) from a birds-eye perspective.

14. Vehicle (50) according to one of the preceding claims, wherein the image capture unit (30) is attached to a side of the vehicle (50) such that the viewing area (60) is sensed from front to rear in the forward driving direction of the vehicle (50).

15. Vehicle (50) according to one of the preceding claims, wherein the image capture unit (30) comprises a single digital image sensing unit (36) for sensing the parts of the first and second

## Revendications

1. Véhicule (50), en particulier véhicule utilitaire, avec un système de vision (10), dans lequel le système de vision (10) présente :
une unité d'enregistrement d'image (30) montée sur le véhicule (50), une unité de calcul (20) se trouvant en liaison avec l'unité d'enregistrement d'image (30) et une unité de reproduction (40) se trouvant en liaison avec l'unité de calcul (20),
dans lequel l'unité d'enregistrement d'image (30) comporte un objectif (34) avec un axe optique (32) et une unité de détection d'image (36) numérique et l'unité d'enregistrement d'image est montée sur le véhicule (50) de sorte qu'elle détecte lors de l'utilisation une zone de vision (60) avec au moins une partie d'un premier champ de vision (62) prescrit légalement et au moins une partie d'un second champ de vision (64) prescrit légalement sur le côté du véhicule (50) et
dans lequel le premier champ de vision légal est conçu de sorte que le conducteur de véhicule puisse voir au moins une partie plane et horizontale de la chaussée de 5 m de largeur qui est délimitée côté véhicule par un plan parallèle au plan médian longitudinal perpendiculaire du véhicule, s'étendant à travers le point extrême sur le côté du conducteur ou le côté du passager du véhicule, et qui s'étend de l'horizon jusqu'à 30 m derrière les points de vue du conducteur de véhicule, et que le conducteur de véhicule puisse voir une bande de 1 m de largeur de la chaussée qui est délimitée côté véhicule par un plan parallèle au plan médian longitudinal perpendiculaire du véhicule, s'étendant à travers le point extrême sur le côté du conducteur ou le côté du passager du véhicule, et qui commence 4 m derrière le plan perpendiculaire s'étendant à travers les points de vue du conducteur de véhicule,
dans lequel l'objectif (34) est agencé par rapport à l'unité de détection d'image (36) numérique de telle manière que l'axe optique (32) s'étende à travers la partie illustrée sur l'unité de détection d'image (36) numérique du premier champ de vision (62) prescrit légalement et
dans lequel l'axe optique (32) est déplacé en direction du véhicule (50) de telle manière qu'il s'étende à travers la partie du premier champ de vision légal.

2. Véhicule (50) selon la revendication 1, dans lequel l'axe optique (32) s'étend de manière excentrée par rapport au centre de gravité géométrique de l'unité de détection d'image (36) numérique.

3. Véhicule (50) selon l'une des revendications précédentes, dans lequel l'unité de détection d'image (36) numérique est sensiblement symétrique et présente au moins un axe de symétrie.

4. Véhicule (50) selon la revendication 3, dans lequel l'axe optique (32) s'étend de façon gauchie par rapport à au moins un des axes de symétrie de l'unité de détection d'image (36) numérique.

5. Véhicule (50) selon l'une des revendications précédentes, dans lequel l'axe optique (32) s'étend à travers le milieu vertical de la partie illustrée sur l'unité de détection d'image (36) numérique du premier champ de vision (62) prescrit légalement.

6. Véhicule (50) selon l'une des revendications précédentes, dans lequel l'axe optique (32) s'étend à travers le milieu horizontal de la partie illustrée sur l'unité de détection d'image (36) numérique du premier champ de vision (62) prescrit légalement.

7. Véhicule (50) selon l'une des revendications précédentes, dans lequel l'axe optique (32) s'étend à travers le centre de surface de la partie illustrée sur l'unité de détection d'image (36) du premier champ de vision (62) prescrit légalement.

8. Véhicule (50) selon l'une des revendications précédentes, dans lequel le second champ de vision (64) légal correspond au champ de vision IV défini dans la directive ECE R 46 pour des rétroviseurs extérieurs à grand angle qui est conçu de sorte que le conducteur de véhicule puisse voir au moins une partie plane et horizontale de la chaussée de 15 m de largeur qui est délimitée côté véhicule par un plan parallèle au plan médian longitudinal perpendiculaire du véhicule, s'étendant à travers le point extrême sur le côté du conducteur ou le côté du passager du véhicule, et qui s'étend au moins 10 à 25 m derrière les points de vue du conducteur de véhicule, et que le conducteur de véhicule puisse voir une bande de 4,5 m de largeur de la chaussée qui est délimitée côté véhicule par un plan parallèle au plan médian longitudinal perpendiculaire du véhicule, s'étendant à travers le point extrême sur le côté du conducteur ou le côté du passager du véhicule, et qui commence 1,5 m derrière le plan perpendiculaire s'étendant à travers les points de vue du conducteur de véhicule.

9. Véhicule (50) selon l'une des revendications précédentes, dans lequel l'unité de calcul (20) est réalisée afin de recevoir une image détectée par l'unité d'enregistrement d'image (30) et de modifier en une image de reproduction de telle manière que la partie détectée par l'unité d'enregistrement d'image (30) du premier champ de vision (62) prescrit légalement et la partie détectée du second champ de vision (64) prescrit légalement soient contenues dans l'image de reproduction et
l'unité de reproduction (40) est réalisée afin d'être agencée de manière visible à l'intérieur du véhicule (50) par le conducteur et de représenter l'image de reproduction reçue par l'unité de calcul (20),
dans lequel l'unité de reproduction (40) est réalisée en particulier afin de représenter durablement l'image de reproduction reçue par l'unité de calcul (20).

10. Véhicule (50) selon l'une des revendications précédentes, dans lequel l'unité d'enregistrement d'image (30) présente de plus un boîtier (39), dans lequel sont agencés l'unité de détection d'image (36) numérique et un dispositif de retenue (38) pour l'unité de détection d'image (36) numérique, et dans lequel l'objectif (34) est fixé sur le boîtier (39).

11. Véhicule (50) selon la revendication 10, dans lequel l'objectif (34) est agencé de manière excentrée par rapport au dispositif de retenue (38) et à l'unité de détection d'image (30) numérique.

12. Véhicule (50) selon la revendication 10, dans lequel l'unité de détection d'image (36) numérique est agencée de manière excentrée par rapport au dispositif de retenue (38) et à l'objectif (34),
dans lequel l'unité de détection d'image (36) numérique est en particulier un CMOS ou un capteur CCD.

13. Véhicule (50) selon l'une des revendications précédentes, dans lequel l'unité d'enregistrement d'image (30) est de plus réalisée afin de détecter la zone de vision (60) depuis une perspective d'oiseau.

14. Véhicule (50) selon l'une des revendications précédentes, dans lequel l'unité d'enregistrement d'image (30) est montée sur un côté du véhicule (50) de telle manière que la zone de vision (60) soit détectée dans le sens de marche avant du véhicule (50) de l'avant vers l'arrière.

15. Véhicule (50) selon l'une des revendications précédentes, dans lequel l'unité d'enregistrement d'image (30) comporte une seule unité de détection d'image (36) numérique pour la détection des parties du premier et second champ de vision (62, 64) prescrits légalement.
